# EUROPEAN PATENT APPLICATION

(11) **EP 4 604 413 A1**
(43) Date of publication of application: **20.08.2025**
(21) Application number: 24158403.6
(22) Date of filing: 19.02.2024
(51) Int. Cl.: H04B 7/06

(54) **USER EQUIPMENT PARTICIPATING IN A BEAM MANAGEMENT REPORTING PROCEDURE**

(71) Applicant: Panasonic Intellectual Property Corporation of America, Torrance, CA 90504 (US)
(72) Inventor: ZEINEDDINE, Khalid, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment comprising the following. A processing circuitry of the UE determines whether to initiate a beam management reporting procedure, based on results of measurements performed by the UE on one or more downlink reference signals. The processing circuitry, in case of determining to initiate the beam management reporting procedure, generates a beam management report comprising information for assisting beam management at a base station for the UE. A transmitter of the UE transmits the generated beam management report to the base station.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved beam management reporting procedure.

In an embodiment, the techniques disclosed here feature a user equipment comprising the following. A processing circuitry of the UE determines whether to initiate a beam management reporting procedure, based on results of measurements performed by the UE on one or more downlink reference signals. The processing circuitry, in case of determining to initiate the beam management reporting procedure, generates a beam management report comprising information for assisting beam management at a base station for the UE. A transmitter of the UE transmits the generated beam management report to the base station.

Additional benefits and advantages of the disclosed embodiments and different implementations will be apparent from the specification and figures. The benefits and/or advantages may be individually obtained by the various embodiments and feature1s of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows exemplary functional split options in 5G O-RAN,
- **Fig. 3**: illustrates a simplified and exemplary implementation of a set of synchronization signal blocks distributed in a half-frame,
- **Fig. 4**: illustrates several beams and the corresponding SSB index, SSB1-SSB8, and how the beams are transmitted by the gNB in a beam-sweeping manner,
- **Fig. 5**: illustrates a signaling diagram for CSI measurement and reporting,
- **Fig. 6**: illustrates an exemplary and simplified structure of a UE and a gNB,
- **Fig. 7**: illustrates a structure of the UE according to an exemplary implementation of the improved beam management reporting procedure,
- **Fig. 8**: illustrates a flow diagram for the UE behavior according to an exemplary implementation of the improved beam management reporting procedure,
- **Fig. 9**: is a signaling diagram illustrating an exemplary exchange between the UE and the gNB for an exemplary implementation of the improved beam management reporting procedure,
- **Fig. 10**: illustrates beamformed downlink reference signals RSi - RSm of Set1 transmitted from a gNB to a UE,
- **Fig. 11**: illustrates an exemplary implementation of the detailed beam management report,
- **Fig. 12**: illustrates an exemplary implementation of the intermediate beam management report,
- **Fig. 13**: illustrates beamformed downlink reference signals RSi - RSm of Set1 transmitted from a gNB to a UE with two antenna panels
- **Fig. 14**: illustrates an exemplary implementation of the detailed beam management report extended with an indication of the antenna panel for each indicated downlink reference signal,
- **Fig. 15**: illustrates an exemplary implementation of the intermediate beam management report extended with an indication of the antenna panel for each indicated downlink reference signal, and
- **Fig. 16**: illustrates an exemplary implementation of the intermediate beam management report extended with an indication of one selected antenna panel.

### DETAILED DESCRIPTION

### 5G NR system architecture and protocol stacks

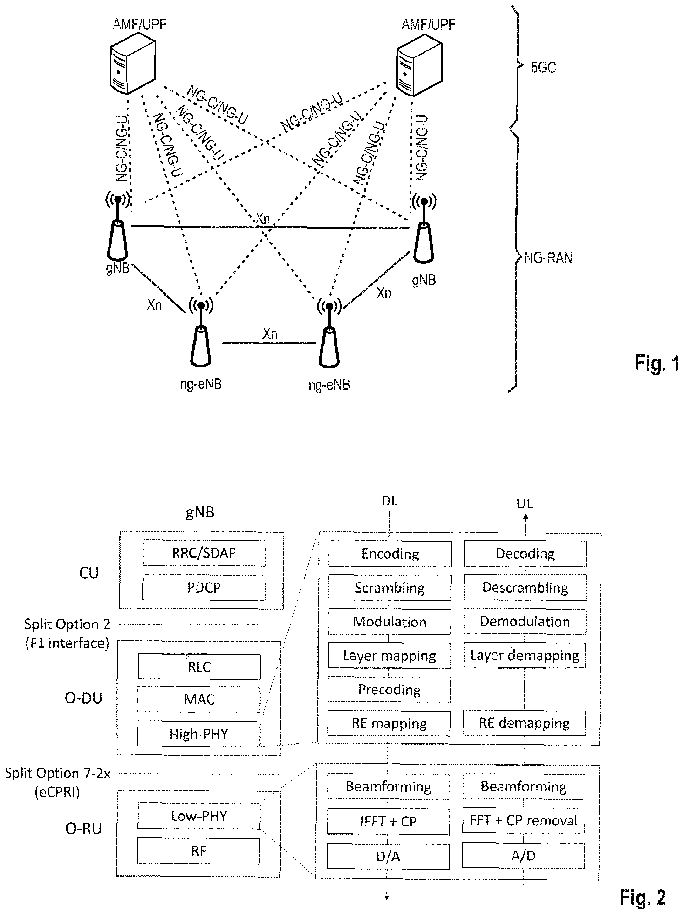

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v18.0.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 2** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (e.g. PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.6.0 sections 7.4.2.2 and 7.4.2.3 (see also 3GPP TS 38.211 v18.1.0 sections 7.4.2.2 and 7.4.2.3), including the respective sequence generation and mapping to physical resources.

The time-frequency structure of an SS/PBCH block, carrying the SSS is described in the 3GPP TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

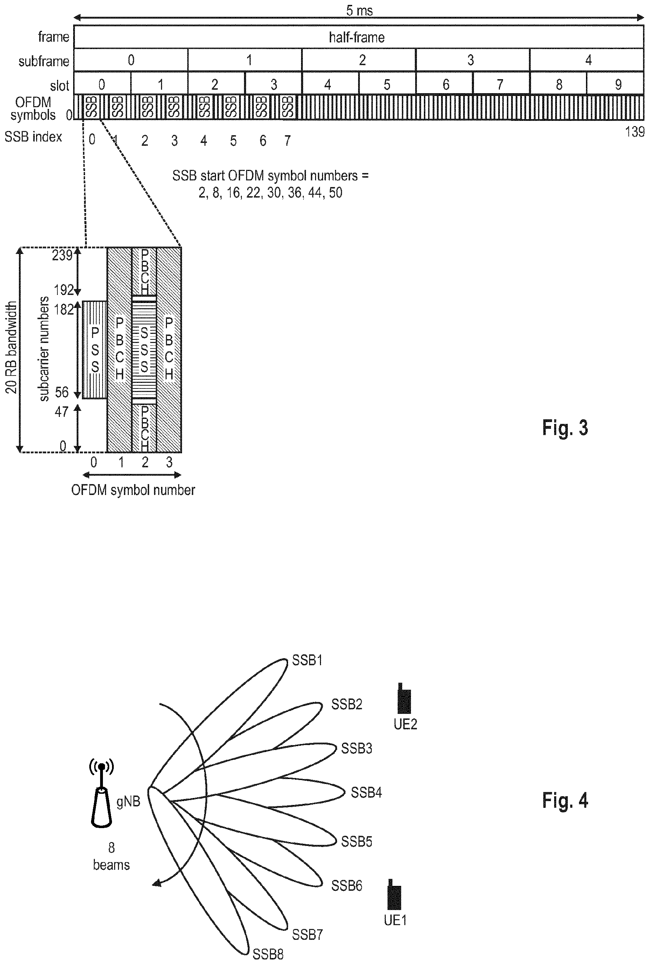

A simplified and exemplary illustration of the SSB according to the above definitions is illustrated in Fig. 3, which shows at the bottom part the PSS, SSS, and PBCH in the time and frequency domain.

The SSB set illustrated in Fig. 3 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 4****.** Similar to the exemplary assumption of Fig. 3, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Reference Signals

Several different types of reference signals (RS) are used for 5G NR (see 3GPP TS 38.211 v18.1.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see 3GPP TS 38.214 v18.1.0, e.g. section 8.4.1)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. 3GPP TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using e.g. the IE *CSI-RS-ResourceMapping* that configures the resource element mapping of a CSI-RS resource in the time- and frequency domain.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator).

Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI). For beam management, when part of the CSI framework, a UE may be configured using an information element, IE, *CSI-ReportConfig,* with the higher-layer parameter reportQuantity set to one or more of "cri-RSRP", "cri-SINR", "ssb-Index-RSRP", "ssb-Index-SINR", "cri-RSRP-Index", "ssb-Index-RSRP- Index", "cri-SINR-Index", "ssb-Index-SINR- Index".

### Initial beam establishment

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks) (see Fig. 3). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Beam measurement and reporting

General operations performed during one or more of said above main procedures may involve one or more of:
- *beam sweeping,* i.e., covering a spatial area with a set of beams transmitted and received according to pre-specified intervals and directions,
- *beam measurement,* i.e., the evaluation of the quality of the received (beam) signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.

In brief, beam measurement and reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

### Channel State Information measurement and reporting framework

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the lEs *CSI-IM-Resource,* and *SSB-Index.*
2) List of *CSI-ResourceConfig* I Es
   - Different *CSI-ResourceConfig* in the list can contain one or more different RS resource sets, chosen from List element 1). This may include *NZP-CSI-RS-ResourceSet, CSI-IM-ResourceSet,* and/or *CSI-SSB-ResourceSet,* respectively identified by suitable IDs (see e.g. *NZP-CSI-RS-ResourceSetld, CSI-IM-ResourceSetld,* and/or *CSI-SSB-ResourceSetld)*
3) List of CSI-ReportConfig IEs.
   - Different *CSI-ReportConfig* in the list configure different CSI report instances. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1.0, in section 6.3.

There are at least two types of reference signals that can be used for the measurements, the SSB (see above mentioned SSB-*Index*) and the CSI-RS (Channel State Information-Reference Signals; see above *NZP-CSI-RS-Resource* IE and *CSI-IM-Resource* IE). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

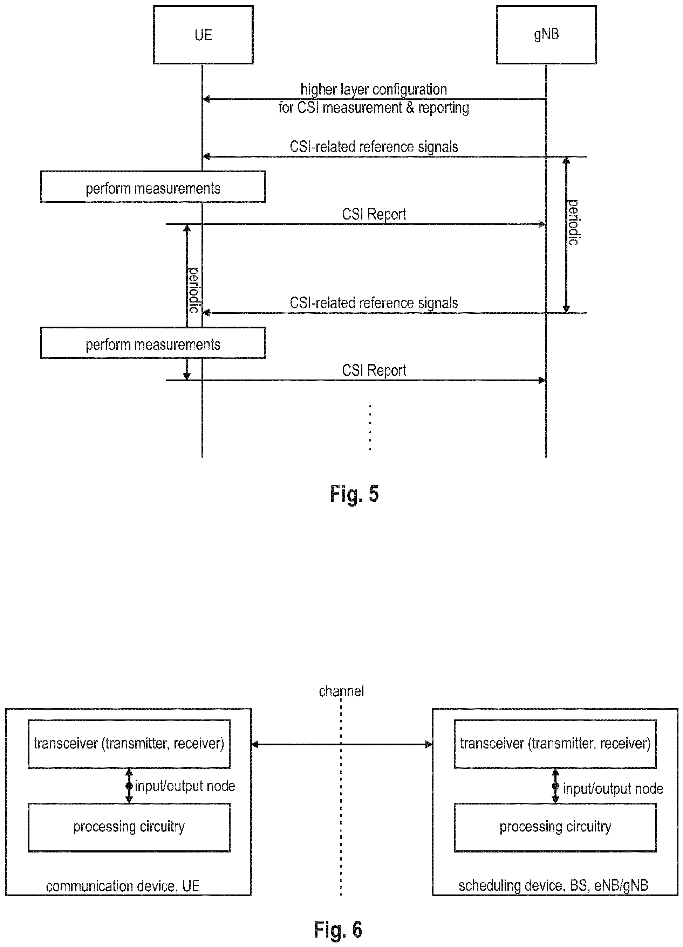

Fig. 5 illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Multi-panel UEs

Massive MIMO is one of the key enabling technologies in 5G wireless communications. A large number of antenna elements bring extra degrees of freedom for increasing the throughput and considerable beamforming gains for improving the coverage. An antenna array is a set of antennas commonly organized in a structure such as an array of rows and columns. An antenna array can be used for both transmission and reception. By transmitting the same signal (weighted according to the beamforming weight vector) from all the antennas, a beamforming gain can be achieved by directing the transmitted signal power in a certain direction toward the intended user. Similarly receive beamforming gain can be achieved by receiving the signal from a specific direction. The dual polarized Uniform Planar Array (UPA) is probably the most common array configuration being considered for advanced 4G and 5G systems. A UPA which is also referred to as uniform rectangular array offers beamforming capabilities in the vertical and horizontal directions. The antenna elements of a UPA are positioned on a uniform grid with Nv rows and Nh columns and hence it contains N = Nv*Nh antenna elements. A dual polarized UPA is a UPA of dual polarized antenna element pairs, more specifically two antenna elements with different and preferably orthogonal polarization, and hence it contains 2Nv*Nh antenna elements.

An antenna panel is an antenna array or an array of antenna arrays. A UE communicating with a gNB especially at higher frequencies (for example millimeter wave transmissions above 24GHz) might be installed with multiple panels, and every panel as described above is comprised of multiple antenna elements (e.g., 16 antenna components, 32 antenna components, and/or the like). The antenna panels can have different capabilities and be installed on different sides of the UE physical chassis. A panel, for purposes of multi-panel operation, may include antenna components that are capable of independent control of a transmission beam relative to other panels, that are capable of independently controlling transmission power relative to other panels, that have different number of maximum SRS ports, and/or the like.

While the UE may be capable of using multiple panels for UL transmission, a gNB that communicates with the UE may be unaware of the multi panel capabilities of the UE, and it can be informed by the UE about this. Therefore, the UE transmits to the gNB a means for identifying one or more multi panel capabilities for multi-panel operation. In 5G, the UE sends the gNB a list of capability indices, each index indicating the maximum number of SRS ports, and hence a type of panel it is equipped with. Two panels with the same number of maximum SRS ports share the same index. Therefore, when the UE is configured with a *CSI-ReportConfig* with the higher layer parameter *reportQuantity* set to ' cri-RSRP- Index' or 'ssb-Index-RSRP- Index' an index of UE capability value set, indicating the maximum supported number of SRS antenna ports, is reported along with the pair of SSBRI/CRI and L1-RSRP.

### Transmission Configuration Indicator (TCI) states

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field "*Transmission Configuration Indication*".
- Step 3: One out of the 8 activated TCI states is then actually used by the UE to receive a target channel/signal. For example, the UE receives a DCI signal, which indicates one of the codepoints in the DCI field "*Transmission Configuration Indication*". The UE applies the indicated codepoint to the target channel(s) or target signal(s).

### Configuration of TCI states (TCI Configuration)

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DL/UL operation) as follows:

### TCI-State information element

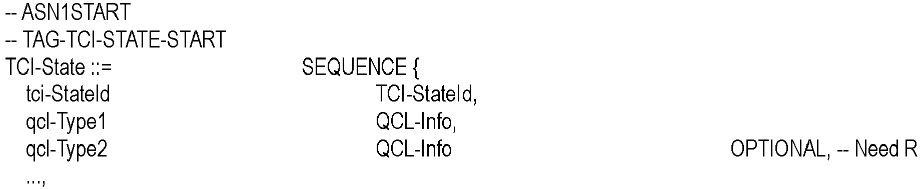

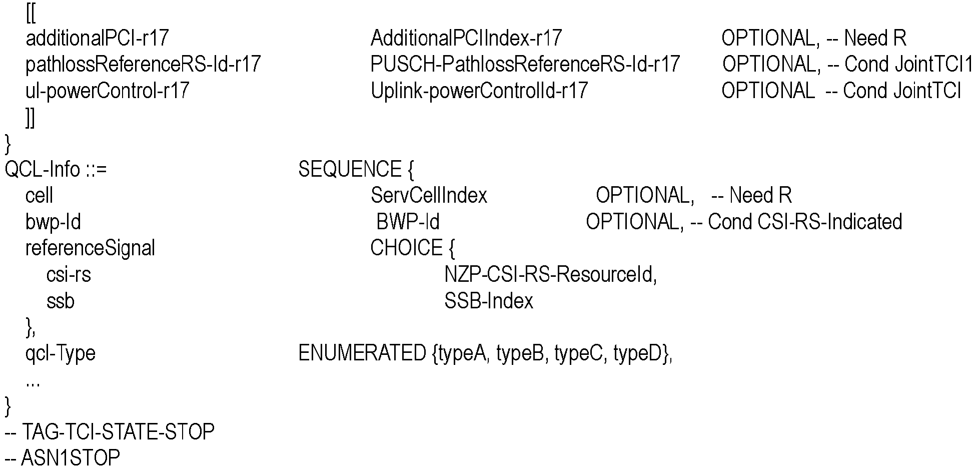

| ***QCL-Info* field descriptions** |
|---|
| ***bwp-Id*** |
| The DL BWP which the RS is located in. If the field is absent, the RS is located in the DL BWP in which the *TCI-State* is applied by the UE. |
| ***cell*** |
| The UE's serving cell in which the *referenceSignal* is configured. If the field is absent, the *referenceSignal* is configured in the serving cell in which the *TCI-State* is applied by the UE. The RS can be located on a serving cell other than the serving cell for which the *TCI-State* is applied by the UE only if the *qcl-Type* is configured as *typeC* or *typeD.* If the *referencesignal* is set to *csi-rs* and *unifiedTCI-StateType* is configured, either both *cell* and *bwp-Id* are present or both *cell* and *bwp-Id* are absent. See TS 38.214 [19] clause 5.1.5. |
| ***referenceSignal*** |
| Reference signal with which quasi-collocation information is provided as specified in TS 38.214 [19] clause 5.1.5. |
| ***qcl-Type*** |
| QCL type as specified in TS 38.214 [19] clause 5.1.5. |

| ***TCI-State* field descriptions** |
|---|
| ***additionalPCI*** |
| Indicates the physical cell IDs (PCI) of the SSBs when *referenceSignal* is configured as SSB for both QCL-Type1 and QCL-Type2. In case the cell is present, the *additionalPCI* refers to a PCI value configured in the list configured using *additionalPCI-ToAddModList* in the serving cell indicated by the field *cell*. Otherwise, it refers to a PCI value configured in a list *additionalPCI-ToAddModList* configured in the serving cell where the *TCI-State* is applied by the UE. When this field is present the *cell* for *qcl-Type1* and *qcl-Type2* is configured with same value, if present. |
| ***pathlossReferenceRS-Id*** |
| The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |
| ***qcl-Type1, qcl-Type2*** |
| QCL information for the TCI state as specified in TS 38.214 [19] clause 5.1.5. |
| ***tci-StateId*** |
| ID number of the TCI state. |
| ***ul-PowerControl*** |
| Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *dl-OrJointTCI-StateToAddModList* is configured. |

| **Conditional Presence** | **Explanation** |
|---|---|
| *CSI-RS-Indicated* | This field is mandatory present if *csi-rs* is included and *unifiedTCI-StateType* is not configured. This field is optionally present, Need R, if *csi-rs* is included and *unifiedTCI-StateType* is configured. Otherwise, it is absent, Need R. |
| *JointTCI* | This field is optionally present, Need R, if this serving cell is configured with *unifiedTCI-StateType* set to '*joint*'*.* It is absent, Need R, otherwise. |
| *JointTCI1* | This field is mandatory present, if this serving cell is configured with unifiedTCI-StateType set to 'joint'. It is absent, Need R, otherwise. |

For the uplink, the information element *TCI-UL-State* is defined in 3GPP TS 38.331, section 6.3.2.

### 3GPP Release 19 MIMO evolution - UE-initiated / event driven beam management

As presented above, the network may configure periodic or semi-persistent beam reporting or trigger aperiodic beam reporting for the purpose of timely acquiring a best/preferred beam for data / control transmissions. This may result in large uplink reporting overhead and control signaling overhead in addition to reporting latency. Due to the network-configured nature of the beam reporting, the reporting latency caused by the periodic or semi-persistent beam reporting or triggered aperiodic beam reporting may also result in unnecessarily prolonged periods of communication between UE and network using beams that may have degraded unexpectedly. This might even result in beam failures, which then results in that the UE having to perform a beam failure detection and recovery procedure, rather than performing a simple beam switch in a timely manner. This is inefficient, and further, retransmissions of data might be required in addition to the incurred latency of the recovery procedure.

Given that the UE has better and more-timely knowledge of beam quality changes, beam reporting procedures that are initiated by the UE have the potential to lead to more timely beam reports together with reduced reporting overhead and preventing prolonged degraded communication quality.

Consequently, there is a need to specify enhancements to facilitate UE-initiated / event-driven beam management reporting procedures for reducing overhead and/or reporting latency. For such a UE-initiated beam reporting procedure, for the UE to know about the beam-quality change and about when to initiate beam reporting, the UE can perform measurements on DL reference signals. Based on these measurements, the UE can detect whether UE-initiated beam reporting is needed or not. For such a UE-initiated beam reporting procedure, the UE needs to generate the beam management report to include suitable information that assists the beam management at the base station side.

### Further Improvements

The inventors thus identified the possibility to define an improved beam management reporting procedure to avoid one or more of the above described disadvantages. The present invention relates to different solutions and variants for such an improved beam management reporting procedure, in one example an improved UE-initiated beam management reporting procedure.

Beam management procedures will play an important role in 6G communication systems, which are expected to operate in the higher frequency ranges (7-24 GHz, FR2 range, Terahertz range).

### Embodiments

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The expression **"a set of one or more downlink reference signals"** can be broadly understood as referring directly to the "one or more downlink reference signals". An alternative expression is "a list of one or more downlink reference signals".

The expressions **"beam"** and **"downlink reference signal"** can be used interchangeably, because the beam is a representation of the spatial receive filter used to receive a particular downlink reference signal. For instance, in the present scenario of an improved beam management reporting procedure, it is assumed that communication between the UE and the gNB is performed via beams (be it UL beam or DL beam). Downlink reference signals can be transmitted via narrow beams (e.g. common narrow beam signals are CSI-RS or DMRS) or transmitted via wider beams (e.g. common wide beam signal is SSB). Another expression in this connection is **"spatial direction",** where a beam (and thus the corresponding downlink reference signal) implies a certain "spatial direction" in which the DL RS is received (from viewpoint of UE) or in which the DL is transmitted (from viewpoint of gNB). Thus, the beam management report might be understood as reporting "downlink reference signals", or as reporting "beams", which respectively imply reporting "spatial directions".

The expression **"beam management report procedure"** or **"beam reporting procedure"** or **"UE-initiated beam reporting procedure"** and similar expressions can be broadly understood as referring to a procedure that is initiated by the UE and may involve that, after initiation, the UE transmits a report to the base station.

**Fig. 6** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present invention relates to different solutions (and respective variants) of an improved UE-initiated beam management reporting procedure.

In connection with these solutions, improved UEs, improved base stations and improved integrated circuits are presented, which participate separately or together in the improved UE-initiated beam management reporting procedures. Corresponding methods for the UE behavior and the base station behavior are provided as well. The integrated circuits may correspond to the UE and base station, and respectively their behavior.

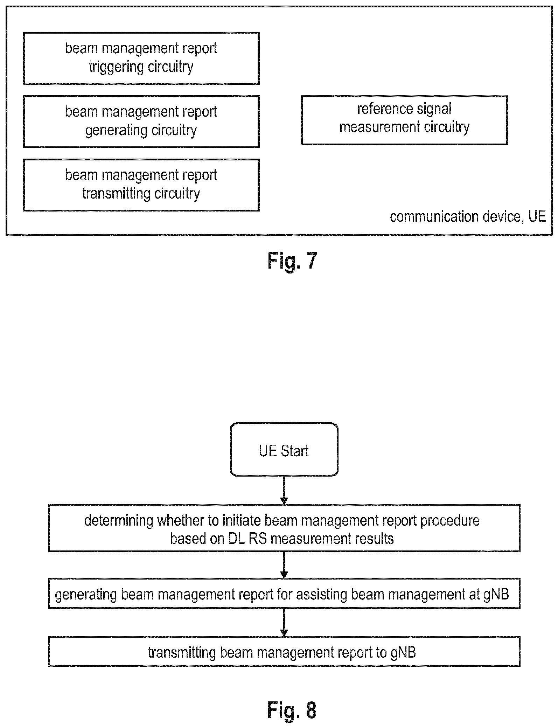

**Fig. 7** illustrates a simplified and exemplary UE structure according to a basic implementation of the improved beam management reporting procedure presented in more detail below. In one example, the UE structure can be implemented based on the general UE structure explained in connection with Fig. 6. The various structural elements of the UE illustrated in said Fig. 7 can be interconnected between one another e.g., with corresponding input/output nodes (not shown) e.g., in order to exchange control and user data and other signals. Although not shown for illustration purposes, the UE may include further structural elements.

As apparent from Fig. 7, the UE may include a beam management report triggering circuitry, a beam management report generating circuitry, a beam management report transmitting circuitry, and a reference signal measurement circuitry. The processing circuitry of the general UE structure of Fig. 6 can be implemented as the above beam management report triggering circuitry, beam management report generating circuitry, and reference signal measurement circuitry of Fig. 7, and can also perform further functions as will be become apparent from below. The transceiver of Fig. 6 can function as the above beam management report transmitting circuitry of Fig. 7, and can also perform further functions as will become apparent from below.

One exemplary procedure is implemented by a UE that includes the following. A processing circuitry of the UE determines whether to initiate a beam management reporting procedure, based on results of measurements performed by the UE on one or more downlink reference signals. The processing circuitry, in case of determining to initiate the beam management reporting procedure, generates a beam management report comprising information for assisting beam management at a base station for the UE. A transmitter of the UE transmits the generated beam management report to the base station.

A corresponding exemplary method comprises the following steps performed by a UE:
determining whether to initiate a beam management reporting procedure, based on results of measurements performed by the UE on one or more downlink reference signals,
in case of determining to initiate the beam management reporting procedure, generating a beam management report comprising information for assisting beam management at a base station for the UE, and
transmitting the generated beam management report to the base station.

A corresponding sequence diagram for an exemplary UE behaviour in line with the above-discussed UE and UE method is presented in **Fig. 8****.**

The above-described improved procedure at the UE facilitates achieving the objective and overcoming at least some of the drawbacks explained above. On the one hand, the improved UE-initiated beam reporting procedure facilitates exploiting the UE's better and more timely knowledge of the beam quality changes, so as to facilitate more timely reports while at the same time reducing the reporting overhead and reporting latency. With the timely beam reporting procedure, unnecessary periods of degraded downlink communication from the network may be reduced, resulting in network energy saving as higher energy consuming protocols such as UE initiated beam recovery procedures and network initiated retransmissions or high power transmissions of data or control signals may be avoided. Furthermore, the improved UE-initiated beam management reporting procedure provides a mechanism that enables managing/controlling the probability of false alarms being raised to the network, hence preventing any unnecessary overhead for the UE's beam adjustment or reselection.

Different and exemplary implementations of the improved beam management reporting procedure are explained in the following. For the explanation of the different implementations, some exemplary and simplifying assumptions are made.

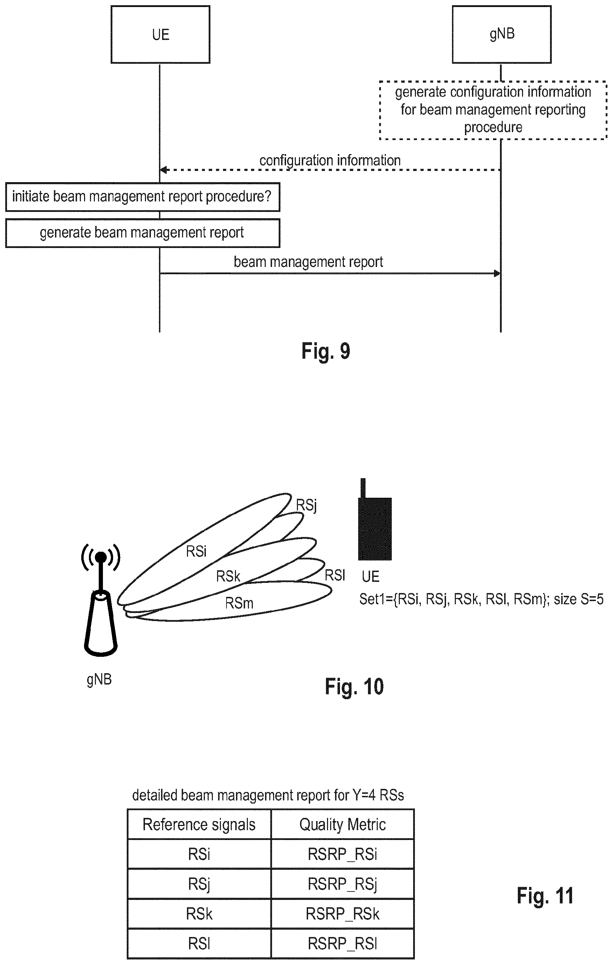

**Fig. 9** is a signaling diagram of an exemplary and simplified implementation of the improved beam management reporting procedure, illustrating the exchange of messages between the different participating entities (here the UE and gNB) and the steps performed at these entities. The UE behaviour and gNB behaviour follow the above described UE and base station and the respective methods.

It is assumed that the UE is located in its current serving cell, controlled by the gNB (as an example of a base station), which is also responsible for the beam management for the UE. The UE and gNB may already communicate with each other, e.g. via PDCCH, PDSCH etc. The UE on the other hand assists the gNB for the beam management according to the improved UE-initiated beam management reporting procedure.

For example, the UE may assist beam management at the gNB by providing information on possible different and better beams that can be used by the gNB in the downlink transmission towards the UE (e.g. instead of a currently-used beam). Correspondingly, the UE-initiated beam management report can be generated to carry such information in different ways (as will be explained below). Broadly defined, the beam management report thus assists in the UE-related beam management at the gNB by indicating such a different beam or indicating that such a different beam exists.

One optional process is that the gNB generates configuration information for the improved beam management reporting procedure and transmits said generated configuration information to the UE (see dashed box and arrow in Fig. 9). According to different exemplary implementations (for details see below), the configuration information may for example indicate parameters for implementing a limitation mechanism (e.g. maximum number of downlink reference signals), indicate a type of beam management report to be transmitted by the UE, etc.

The processes at the UE side have been already explained in detail with respect to Fig. 7 and 8 above. In brief, assuming that the UE indeed determines to initiate a beam management reporting procedure, the UE proceeds to generate and then transmit a corresponding beam management report to the gNB. Depending on the content of the beam management report, the gNB can then proceed appropriately with the beam management, e.g. initiate beam switching procedure, adjusting beam, etc.

More detailed and exemplary implementations of the improved UE-initiated beam management reporting procedure will be explained in the following.

### <Determining whether to initiate a beam management reporting procedure >

As explained above with respect to Fig. 7, 8 and 9, the UE determines wherein to initiate (other possible term "trigger") a beam management reporting procedure, based on results of measurements performed by the UE on one or more downlink reference signals. Exemplary implementations thereof will be explained in more detail below.

The decision on whether to initiate the beam management report procedure is taken by the UE, in other words the beam management reporting is initiated by the UE, which thus has more control on whether and when to transmit a beam management report than compared to a network-controlled beam management reporting (e.g. periodic, semi-persistent or α-periodic). This has the further benefit already mentioned above, e.g. facilitating more timely reports while at the same time reducing the reporting overhead and reporting latency.

Whether to trigger the beam management reporting procedure by the UE can be based on measurements that are performed by the UE on downlink reference signals that are transmitted by the base station. These downlink reference signals can be e.g. one or more cell search signals (such as Synchronization Signal Block reference signals, SSBs), and/or one or more UE-specific reference signals (such as Channel State Information reference signals, CSI-RS), and/or one or more downlink demodulation reference signals, such as DM-RS, relating to a downlink control channel (such as a Physical Downlink Control Channel, PDCCH) actually transmitted from the gNB to the UE.

These downlink reference signals measured for the purpose of determining whether to initiate a beam management reporting procedure can include downlink reference signals that allow determining the reception quality of currently used beams. For instance, such downlink reference signals may include downlink reference signals that have a same or similar spatial direction as a beam or beams currently used by the gNB in the downlink to transmit control or user data, e.g. the PDCCH or PDSCH.

In one example, these downlink reference signals, usable for triggering the beam management reporting procedure, are configured as an initial set of one or more downlink reference signals at the UE (called for brevity Set0). This initial downlink reference signal set can be different from another set of downlink reference signals (see below Set1) usable at the UE for the purpose of generating the beam management report (for details see below) and of assisting the beam management at the gNB side.

The downlink reference signals to be measured for the report triggering are determined by the UE for instance as follows. In one option, the UE determines these downlink reference signals based on configuration information that is received from the gNB. This gNB configuration can be performed using configuration messages of a higher-layer protocol, such as the RRC protocol in exemplary 3GPP-compliant implementations. The gNB is aware of the beams currently used for communicating with the UE and thus can determine those downlink reference signals that the UE should measure for the purpose of triggering a beam management report. Correspondingly, the gNB can also keep the downlink reference signals to be measured (Set0) up to date, by transmitting suitable configuration information to the UE, e.g. after having switched to another DL/UL beam for the UE (e.g. in response to the UE-initiated beam management reporting).

In any case, the UE can measure downlink reference signals. Whether to indeed initiate the beam management reporting is then based on the results of these measurements on the downlink reference signals. There are several trigger conditions on when the UE determines to initiate the beam management reporting. In general, triggering the beam management reporting may be performed in case the UE becomes aware of information usable for assisting the beam management at the gNB side. This usable information can refer e.g. to the reception quality of currently-used beams (DUUL).

According to one exemplary trigger condition, beam management reporting is to be initiated by the UE in case the measured quality of the downlink reference signals is bad, e.g. below a quality threshold. Other exemplary trigger conditions are that the measured quality of the downlink reference signals has deteriorated, or has deteriorated by more than a preconfigured amount of the quality measure (e.g. by more than X RSRP), or has deteriorated with a certain speed.

According to one exemplary implementation, the measurement of the downlink reference signals produces quality measurement results. Examples for the quality measurement results are a reference signal received power, RSRP, measurement value and/or a signal to interference plus noise ratio, SINR, measurement value, and/or any other suitable quality metric.

It is assumed for the following that the UE eventually determines to initiate a beam management reporting procedure and thus proceeds to generate a beam management report to be transmitted to the gNB.

### <Generating a beam management report >

As explained above with respect to Fig. 7, 8 and 9, the UE generates a beam management report that comprises information for assisting beam management at a base station for the UE. Exemplary implementations thereof will be explained in more detail below.

After the UE decides to initiate the beam management reporting, the UE proceeds to generate the content of such a beam management report.

There are several different options on how to implement the beam management reports, particularly the contents of the beam management reports. For the present improved beam management reporting procedure, three different types of a beam management report are explained. As an overview, a basic beam management report indicates that a quality of the downlink signal reception is bad or has deteriorated. A detailed beam management report comprises more information, and particularly indicates downlink reference signals and the corresponding quality measurement results. An intermediate beam management report also provides more information than the basic beam management report, and particularly indicates downlink reference signals that are good enough (e.g. above a quality threshold) for reporting.

### First type of beam management report - Basic

As mentioned above, the first type of beam management report (also termed "basic management report") indicates that a quality of downlink signal reception is bad or has deteriorated. This indication can e.g. be implemented with a flag, such as where the bit of the flag is set to a pre-determined value such as 1.

The content of the basic beam management report is brief, but assists the beam management at the gNB side by pointing to a potential need for a beam switch at the UE side. Due to the better knowledge of the channel state at the UE, this basic beam management report can be transmitted timely to the gNB, which then can react appropriately.

One possible reaction by the gNB is that the gNB sends a request to the UE for triggering a network-initiated CSI report for beam management, e.g. an aperiodic CSI report. On the other hand, a periodic or semi-persistently CSI report may be transmitted soon by the UE anyway, such that the gNB can wait for these opportunities of the periodic/semi-persistent CSI report and does not need to trigger an extra aperiodic CSI report. In any case, the UE would then generate this network-initiated CSI report in line with a configuration received beforehand (e.g. see above *CSI-MeasConfig* IE etc.). The generated CSI report is then transmitted from the UE to the gNB, and the gNB can use the information included in the CSI report for beam management.

One benefit of using the basic beam management report is that it is very simple and causes little overhead in the uplink when transmitting it. Furthermore, the basic beam management report can be generated right after the decision to initiate beam management reporting, because no further measurements and other processes are necessary. However, the basic beam management report does not include any further information that could be usable for the beam management, such as information on possible new beams that have good reception quality. Thus, the gNB might have to request a CSI report to obtain the necessary information from the UE on better beams to which the gNB can switch downlink transmission towards the UE. This may introduce a delay in the beam management (particularly compared to the subsequently-described more detailed types of beam management reports).

The above disadvantages of the basic beam management report can be overcome by the following second and third types of beam management report.

### Second type of beam management report - Detailed

As mentioned above, the detailed type of beam management reports indicates downlink reference signals and the corresponding quality measurement results. According to one exemplary implementation, the detailed beam management report indicates Y downlink reference signals (where Y is ≥1) and for each of the Y reported downlink reference signals, indicates a quality measurement result obtained by the UE from measuring the respective downlink reference signal.

As apparent from the above described content, the detailed beam management report comprises information on downlink reference signals that are to be first measured by the UE.

According to one exemplary implementation, a dedicated set of downlink reference signals is used for the purpose of generating the beam management report (called e.g. Set1 for brevity). This Set1 can be different from the downlink reference signals measured by the UE for the purpose of determining whether to initiate the beam management reporting (see e.g. above initial set of downlink reference signals, Set0). In one example, this downlink reference signal set Set1 can be configured so as to facilitate obtaining information on a new beam / spatial direction, e.g. different from a beam / spatial direction that is currently used by the gNB to transmit downlink data or downlink control data (e.g. PDCCH, PDSCH) to the UE. Such information on a new beam / spatial direction can be useful for the beam management at the gNB side, because the gNB can decide to switch from the current beam to a new (better) beam for improving downlink transmission.

Different exemplary implementations are related to the content of the DL reference signal set, Set1, particularly with regard to one or more types of reference signals that can be comprised in Set1.

In a first Set1 implementation, Set1 comprises one or more cell search signals, such as Synchronization Signal Block reference signals. In this first implementation, the Set1 may not comprise other types of reference signals, i.e. but only the cell search signals. Other expressions for the cell search signals are an initial-access signals or synchronization signals. Such cell search signals are typically transmitted periodically by the gNB, such that the UE can regularly receive and measure this type of reference signal. Furthermore, cell search signals are typically transmitted anyway by the gNB, particularly for the purpose of allowing the cell search. Consequently, re-using cell-search (reference) signals for the improved beam management reporting procedure does not require any additional downlink reference signal and thus avoids extra overhead in the downlink. On the other hand, cell search signals are typically transmitted as a wide beam, such that they are less representative of a possible quality of a downlink channel that could be transmitted in a narrow beam.

In a second Set1 implementation, Set1 comprises one or more UE-specific reference signals, such as Channel State Information reference signals, CSI-RS. In this second implementation, the Set1 may not comprise other types of reference signals, i.e. but only the UE-specific reference signals. These UE specific reference signals are typically configured for one or more UEs, and can thus be transmitted as a narrow beam towards the UE(s) and be flexibly timed (e.g. periodic, semi-persistent and α-periodic). On the other hand, since this type of reference signal is specific to one or more UEs, this might involve an extra reference signal overhead in the downlink to allow implementing the improved beam management reporting procedure.

In a third Set1 implementation, Set1 comprises one or more cell search signals as well as one or more UE-specific reference signals, i.e. a mix of the two reference signal types explained in the above first and second Set1 implementations. Such a combined implementation increases the flexibility of the configuration of Set1 and also facilitates balancing the advantages and disadvantages respectively connected to the first and second implementations.

The above described Set1 definitions do not include the downlink demodulation reference signals (DMRS) of a downlink channel (be it a downlink control channel, e.g. PDCCH, or a downlink data channel, e.g. PDSCH), because one intention of the beam management reporting procedure is to assist the gNB-side beam management in learning about a new and better beam that can be used by the gNB in the downlink (instead of a currently used beam). With respect to said intention, measuring and reporting on the DMRS of an actually transmitted channel is of less relevance.

On the other hand, in further exemplary solutions it is assumed that the beam management reporting procedure by the UE in addition assists the gNB-side beam management by providing information on the currently received beam(s). In such solutions, the Set1 (any of the above first to third Set1 implementations) may additionally include a downlink demodulation reference signal of a downlink control channel or downlink data channel. A demodulation reference signal relating to a downlink control/data channel is transmitted together with the downlink control/data channel and thus has the benefit of allowing to measure the quality of the actual downlink transmission.

According to an exemplary 3GPP-compliant implementation of the improved beam management reporting procedure, the above noted cell-search signal is an SSB, the above UE-specific reference signal is a CSI-RS, and the downlink demodulation reference signal is a PDCCH DMRS from the 3GPP telecommunication systems (see e.g. above explanations in sections "Synchronization Signal Block measurement timing configuration - SMTC - PSS/SSS, PBCH" and "Reference Signals").

The downlink reference signals of Set1 to be measured for generating the beam management report are determined by the UE for instance as follows. In one option, the UE determines these downlink reference signals of Set1 based on configuration information that is received from the gNB. This gNB configuration can be performed using configuration messages of a higher-layer protocol, such as the RRC protocol in exemplary 3GPP-compliant implementations. The gNB is aware of the beams currently used for communicating with the UE and thus can determine downlink reference signals that may have a different spatial direction and could thus serves as new downlink beams to switch to. Correspondingly, the gNB can also keep the downlink reference signals to be measured (Set1) up to date, by transmitting suitable configuration information to the UE, e.g. after having switched to another DL/UL beam for the UE (e.g. in response to the UE-initiated beam management reporting).

In the above, possible implementations of the set of downlink reference signals for generating the beam management report were described.

This set Set1 can be assumed to have a size S, i.e. Set1 comprises a total of S downlink reference signals, for which the UE performs measurements. According to one example of this second type of beam management report, the detailed beam management report could indicate all of the S downlink reference signals and their respective measurement results. However, according to another example of the second type of beam management report, instead of indicating all of those S downlink reference signals (and measurement results), the UE selects Y out of the total S downlink reference signals, wherein 1≤Y<S. The detailed beam management report is thus generated to indicate the thus selected Y downlink reference signals and their respective measurement results.

An exemplary scenario is assumed in which the gNB transmits a plurality of downlink reference signals (beams) to the UE, and **Fig. 10** illustrates beamformed downlink reference signals RSi - RSm from among the plurality of downlink reference signals. It is further assumed that the above discussed Set1, i.e. set of downlink reference signals for generating the beam management report, comprises these downlink reference signals RSi - RSm. The size S of Set1 is thus 5.

The UE performs measurements on the downlink reference signals of Set1 and then generates the detailed beam management report.

The detailed beam management report indicates Y out of the S downlink reference signals of Set1 and the corresponding measurement results for these Y downlink reference signals. **Fig. 11** illustrates one exemplary implementation of the detailed beam management report. It is assumed that Y=4, such that the UE selects 4 out of the 5 downlink reference signals of Set1, here e.g. RSi-RSI. It is exemplarily assumed that the measurement result is provided based on the quality metric RSRP; alternatively, although not illustrated, another quality measurement is the SINR, which could be reported within the detailed beam management report. Correspondingly as illustrated in Fig. 11, the detailed management report identifies the downlink reference signals and, for each identified downlink reference signal, the associated RSRP value.

In the above, it was described that the UE determines Y out of the S downlink reference signals of Set1. There are several options on how the UE selects these Y downlink reference signals. According to the first selection option, the selection by the UE is performed in in a decreasing order or an increasing order of an index of the downlink reference signals within the set. In Fig. 11 the UE selected the first Y downlink reference signals in increasing order (from i to l).

According to a second selection option, the UE selects the Y downlink reference signals in a decreasing order of a quality measurement result of the downlink reference signals.

Other selection mechanisms are also possible, including a random selection of the Y downlink reference signals.

The parameter Y for the downlink reference signal selection can be determined by the UE based on configuration information that is received from the gNB. Alternatively, the parameter Y can depend on a capability of a UE, such as the processing capability. The UE can thus determine the parameter Y based on its own capability, without requiring a prior configuration from the gNB. Furthermore, in one example, the UE capability can be transmitted from the UE to the base station, which allows the gNB to know how the UE operates.

### Third type of beam management report - Intermediate

As mentioned above, the intermediate type of beam management reports indicates downlink reference signals that are good enough. According to one exemplary implementation, the detailed beam management report indicates at most X (where X≥1) downlink reference signals having a quality measurement result above a suitable quality threshold.

In one example, the intermediate beam management report does not carry a quality measurement result for the X downlink reference signals, which thus allows to reduce the amount of uplink traffic caused by the UE-initiated beam management reporting. Instead, the UE performs a pre-selection of the downlink reference signals based on the quality measurement results, such that for instance the beam management report indicates the best X new beams, for assisting the gNB's beam management.

As explained in detail with reference to the second type of beam management report, also for the third type of beam management report, the UE first measures downlink reference signals for the purpose of generating the beam management report. This measurement by the UE can be performed on the set of downlink reference signals (e.g. Set1) as explained above for the second type of beam management report. To avoid repetition, reference is made to the disclosure regarding the Set1 presented above in connection with the second type of beam management report. Consequently, any of the above described implementations of the set of downlink reference signals (Set1) for generating the beam management report can be used here for generating the report of the third type.

Accordingly, this set Set1 can be assumed to have a size S, i.e. Set1 comprises a total of S downlink reference signals, for which the UE performs measurements. According to one example of this third type of beam management report, the intermediate beam management report indicates at most X downlink reference signals out of the total S downlink reference signals, wherein 1≤X<S.

The scenario presented above with respect to Fig. 10 is assumed again, wherein Set1, i.e. the set of downlink reference signals for generating the beam management report, comprises downlink reference signals RSi - RSm. The size S of Set1 is thus 5. The UE performs measurements on the downlink reference signals of Set1 and then generates the intermediate beam management report.

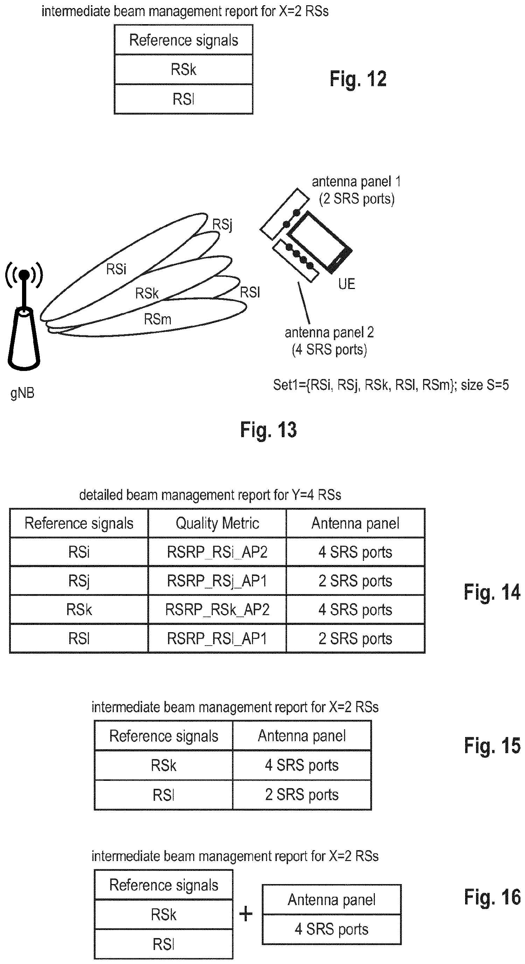

The intermediate beam management report indicates X out of the S downlink reference signals of Set1, without the corresponding measurement result for these X downlink reference signals. Fig. 12 illustrates one exemplary implementation of the intermediate beam management report. It is assumed that X=2, such that the UE selects the best X downlink reference signals of Set1, here e.g. RSk and RSI.

The parameter X for the downlink reference signal selection can be determined by the UE based on configuration information that is received from the gNB.

Alternatively, the parameter X can depend on a capability of a UE, such as the processing capability. The UE can thus determine the parameter X based on its own capability, without requiring a prior configuration from the gNB. Furthermore, in one example, the UE capability can be transmitted from the UE to the base station, which allows the gNB to know how the UE operates.

As discussed above, either one of the intermediate and detailed type of beam management report indicates one or more downlink reference signals. There are different possible implementations on how the downlink reference signal(s) are indicated within the beam management report, three example options will be explained in the following.

According to a first indication option, each of the reported downlink reference signals is indicated based on its identification. For instance, a downlink reference signal can be identified by a global identifier. When exemplary assuming the Set1 of Fig. 10 with {RSi, RSj, RSk, RSI, RSm}, the global identifier of the downlink reference signals could be one of the corresponding IDs RSi, RSj, RSk, RSI, and RSm. According to one example, the global identifier are configured by the gNB using a higher-layer protocol, such as RRC.

According to a second indication option, each of the reported downlink reference signals is indicated based on its index within the set of downlink reference signals. For instance, when exemplary assuming the Set1 of Fig. 10 with {RSi, RSj, RSk, RSI, RSm}, the index of the downlink reference signals could be the corresponding index 1 (for RSi), 2 (for RSj), 3 (for RSk), 4 (for RSI), or 5 (for RSm).

According to a third indication option, each of the downlink reference signals could be indicated as a bit within a bitmap, where each bit is associated unambiguously with one of the downlink reference signals of Set1, e.g. associated in an increasing order of their index within the set. Consequently, the length of the bitmap equals the number of downlink reference signals in Set1 (e.g. parameter S). For instance, when exemplary assuming the Set1 of Fig. 10 with {RSi, RSj, RSk, RSI, RSm}, the bitmap would have 5 bits. When indicating e.g. the reference signals RSk and RSI (as in Fig. 12), the UE could set the bitmap to [0, 0, 1, 1, 0], where the bit value is set to "1" to indicate the associated downlink reference signal (and where the bit value set to "0" does not indicate the associated downlink reference signal).

According to a fourth indication option, a beam indication field is used, which can be set to a value that indicates that combination of downlink reference signals that is to be indicated in the beam management report among a total number of possible combinations. In particular, how many different combinations of downlink reference signals can be indicated within the beam management report depends on the total number S of downlink reference signals of the Set1 and the number R of reportable downlink reference signals (where R can be e.g. Y for the detailed beam management report and could be X for the intermediate beam management report). Put differently, "S choose R" refers to this total number of possible combinations. The beam indication field thus should have a length of log2 (S choose R) bits, so as to be able to unambiguously identify any downlink reference signal combination to be reported.

In this fourth indication option, each value of the beam indication field is associated with a particular combination of downlink reference signals. The UE and the gNB would have the same understanding of the reference signal combination corresponding to the beam indication field. Consequently, in one example, the UE and gNB can both have association information between the beam indication field values and the downlink reference signal combination. As one implementation, this association information, e.g. in the form of a codebook, could be exchanged between the UE and the gNB, including for instance that the gNB generates the associations and transmits them to the UE. As one implementation of this exchange, the codebook can be a higher layer configuration by the gNB sent to the UE.

In any of the above options, the one or more downlink reference signals in the beam management report can be unambiguously indicated.

In the above, different types of beam management reports were described. According to one example implementation, a UE can be able to generate and report just one of the different beam management report types presented above. In such a case, the UE behaviour, with regard to which type of beam management report is to be reported, is unambiguous, and no further configuration or instruction is necessary instead respect.

Alternatively, the UE can be able to report any of two or the three different types of beam management reports. In this latter alternative, the UE additionally determines which type of beam management report should be generated and transmitted. When assuming for instance that the UE is able to transmit any of the three types of beam management reports, the UE may thus determine whether to generate the basic beam management report, or the intermediate beam management report or the detailed beam management report.

In one other example, the UE might be able to transmit the basic beam management report and only one of the intermediate or detailed beam management report. In such cases, the UE chooses between generating the basic or the intermediate beam management report; or the UE chooses between generating the basic or the detailed beam management report.

How the UE selects between the different types of beam management reports can be based on configuration information that is received from the gNB.

Alternatively, the selection can depend on a capability of a UE, such as the processing capability. For instance, a low-capability UE may select the basic type of the beam management report to avoid extra processing and uplink overhead at the UE side. Conversely, a high-capability UE may select the intermediate or detailed beam management report. Furthermore, in one example, the UE capability can be transmitted from the UE to the base station, which allows the gNB to know how the UE operates.

Such a selection procedure gives the UE flexibility to choose between the different types of beam management reports, involving less or more UE processing and less or more uplink overhead.

### <Transmitting the beam management report >

As explained above with respect to Fig. 7, 8 and 9, the UE transmits the generated beam management report to the base station. Exemplary implementations thereof will be explained in more detail below.

In brief, the generated beam management report can be transmitted to the base station based on an available uplink radio resource. For instance, the UE may request an UL resource from the gNB for transmitting the beam management report, wherein the gNB grants an UL resource (e.g. using a DCI), and the UE uses this scheduled UL resource to transmit the beam management report to the base station.

There are other possible implementations on which uplink resources the UE could use to transmit the beam management report to the gNB. For instance, if available, the UE may use a periodic uplink resource (configured by the gNB) to carry the beam management report.

In any case, after having generated the beam management report, the UE transmit the beam management report to the gNB.

### First Variant - Multi-Panel UEs

For the following first variant of the improved UE-initiated beam management reporting procedure, it will be assumed that the UE is a multi-panel UE, e.g. that the UE is equipped with at least two panels of antennas.

In consequence, the beam management report could also assist the beam management at the gNB by providing information on the antenna panels used for transmission and reception at the UE. In particular, the intermediate and detailed type of beam management reports may be generated by the UE to also include such information on the antenna panel(s) with which the reported downlink reference signal(s) was received.

Fig. 13 illustrates one exemplary scenario in which the present first variant of the improved beam management reporting procedure can be applied. In particular, a UE with two antenna panels is assumed, the antenna panel 1 having 2 SRS ports and antenna panel 2 having 4 SRS ports; SRS is an example of an uplink reference signal transmitted by the UE to the gNB for allowing the gNB to determine the best TX UL beam.

The same set of downlink reference signals is assumed as in Fig. 10, i.e. Set1 which comprises the downlink reference signals RSi - RSm: Set1={RSi, RSj, RSk, RSI, RSm}. The size S of Set1 is thus again 5.

The number of antenna panels assumed in the scenario of Fig. 13 as well as the number of SRS antenna ports for one antenna panel are taken as examples. The plurality of antenna panels of a UE can have different or the same number of SRS antenna ports.

It is further assumed that the UE can perform measurements on the downlink reference signals on all its antenna panels, here e.g. on antenna panels 1 and 2. The UE is thus able to obtain measurement results for both antenna panels. It should be noted that not all the downlink reference signals will be necessarily received by all antenna panels equally. For instance, one or more downlink reference signals might not be received at all or very poorly by one antenna panel, while the same one or more downlink reference signals might be received in good quality by another antenna panel of the UE. Furthermore, an antenna panel may also be blocked completely, in which case the UE is not able to receive any downlink reference signal on said blocked antenna panel (e.g. if a hand holding the UE covers an antenna panel completely), particularly in a high operating carrier frequency.

Moreover, typical UEs use only one of the plurality of antenna panels at a time for reception or transmission of data.

The number of antenna ports that an antenna panel supports for the UE for transmitting the SRS is a useful information for the gNB. Particularly in case that the supported SRS antenna port number changes, because the UE changes the antenna panel used for uplink transmission, suitable information in said respect is to be transmitted by the UE to the gNB.

As part of the first variant, the beam management report additionally indicates an antenna panel. There are at least the following two options on how the information on the indicated antenna panel can be incorporated into the beam management report. According to a first option, the antenna panel is indicated in the beam management report by indicating a maximum number of antenna ports supported by the respective antenna panel for transmitting an uplink reference signal.

According to the second option, the antenna panel is indicated in the beam management report by indicating a capability index for said antenna panel. In detail, the capability index is associated with a maximum number of antenna ports supported by the respective antenna panel for transmitting an uplink reference signal. Correspondingly, by indicating the capability index to the gNB, the gNB is able to derive the corresponding number of supported UL RS antenna ports.

For instance, the UE may provide information on the capability of its plurality of antenna panels (at least regarding the maximum number of supported SRS antenna ports) to the gNB, e.g. during an initial configuration between the UE and gNB. The exchanged information of the antenna panel capability can be provided in an indexed form such that the supported capability of an antenna panel is directly associated with a capability index. For instance, a list of indices exists with every index being associated with a maximum number of SRS port, e.g. {0: 2 SRS ports; 1: 4 SRS ports}.

In any case, the beam management report can thus indicate the antenna panel. In the following examples, it is exemplarily assumed that the antenna panel is indicated by its maximum supported number of SRS antenna ports.

Moreover, it is assumed that for each downlink reference signal only one antenna panel is indicated, for example the antenna panel with which the downlink reference signal is best received, i.e. with the best reception quality. Even when assuming that one downlink reference signal (e.g. RSi) is received and measured by both antenna panels, the UE generates the beam management report to indicate for the respective downlink reference signal that antenna panel for which a best reception quality has been measured for said downlink reference signal.

Different exemplary implementations of this first variant are presented in the following.

According to a first implementation, the UE could indicate, for each reported downlink reference signal in the report, also the antenna panel with which said downlink reference signal was received.

For example, when assuming a detailed beam management report as presented above, the UE indicates for each downlink reference signal not only the quality metric but also the antenna panel with which said downlink reference signal was received. The reported quality metric should also be the one that was measured using the antenna panel that is reported in the beam management report.

Put differently, the beam management report is additionally extended to indicate the used antenna panel per indicated downlink reference signal.

**Fig. 14** illustrates one exemplary implementation of the detailed beam management report according to the present first variant. As apparent from Fig. 14, the detailed beam management report (see e.g. Fig. 11) is extended by the additional information on the number of supported SRS antenna ports. As further apparent, the beam management report indicates the quality metric RSRP for the corresponding reported antenna panel. For example, the UE measures RSi on both antenna panels, but measures the best reception quality for RSi on antenna panel 2. Thus, the beam management report indicates RSi, the RSRP for RSi as received on antenna panel 2 (RSRP_RSi_AP2), and 4 SRS ports (i.e. the number of supported SRS antenna ports for antenna panel 2). The same applies to the remaining indicated reference signals RSj-RSI.

**Fig. 15** illustrates one exemplary implementation of the intermediate beam management report according to the present first variant. As apparent from Fig. 15, the intermediate beam management report (see e.g. Fig. 12) is extended by the additional information on the number of supported SRS antenna ports. For instance, the UE measured all reference signals RSi-RSm and identified RSk, RSI as the downlink reference signals having the best reception quality. For RSk, the best reception quality was measured using antenna panel 2, such that the beam management report indicates for RSk the 4 SRS ports of antenna panel 2. Correspondingly, for RSI the best reception quality was measured using antenna panel 1, such that the beam management report indicates for RSI the 2 SRS ports of antenna panel 1.

According to a second implementation, the beam management report reports only one antenna panel, and only in case that the antenna panel to be reported supports a maximum number of SRS antenna ports different than the supported maximum number of SRS antenna ports currently used by the UE for uplink transmission (i.e. for uplink transmission of SRS).

The UE first selects one antenna panel to be reported among the plurality of antenna panels of the UE. This antenna panel selection can be based e.g. on the reception quality experienced by the UE for the antenna panels.

For instance, the UE selects the antenna panel with the overall best reception quality. In particular, this might involve that, for each antenna panel, a combined quality metric (e.g. average, median, etc.) of all measurement results from said antenna panel is determined. The antenna panel with the best overall quality metric is then selected by the UE. For instance, one antenna panel might be blocked substantially or completely, such that another of the antenna panels will have an overall best reception quality.

In another example, the UE selects that antenna panel with which the downlink reference signal having the best reception quality among all downlink reference signals has been received.

After the antenna panel selection as presented above, the UE further determines whether the selected antenna panel supports a maximum number of SRS antenna ports different than currently used for uplink SRS transmission. If so, the UE indicates the antenna panel, e.g. the different supported maximum number of SRS antenna ports, in the beam management report.

Fig. 16 illustrates one exemplary implementation of a beam management report according to the present first variant, extended to report the selected antenna panel according to the second implementation. In the example of Fig. 16, it is assumed that the UE selected antenna panel 2 and further that the UE is currently using antenna panel 1 (with a different support maximum number of SRS ports) for the uplink transmission. Correspondingly, the beam management report (in Fig. 16 exemplarily the intermediate beam management report) is extended to also indicate the 4 SRS ports of antenna panel 2. Although not illustrated, the antenna panel indication of the second implementation could also be transmitted for the basic beam management report or the detailed beam management report.

The first variant of the improved beam management report procedure thus has the benefit that the gNB is additionally provided with information on the antenna panel(s), which information can be used for the beam management. For instance, the gNB learns that the UE might need to change the antenna panel used for uplink and that a different number of SRS antenna ports are supported by the other antenna panel.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a UE is provided that includes the following. A processing circuitry of the UE determines whether to initiate a beam management reporting procedure, based on results of measurements performed by the UE on one or more downlink reference signals. The processing circuitry, in case of determining to initiate the beam management reporting procedure, generates a beam management report comprising information for assisting beam management at a base station for the UE. A transmitter of the UE transmits the generated beam management report to the base station.

According to a second aspect provided in addition to the first aspect, the beam management report is a basic beam management report that indicates:
- that a quality of a downlink signal reception is bad or has deteriorated, optionally by using a flag with a pre-determined value.

In an optional implementation, in response to the basic beam management report, a receiver receives, from the base station, a request for an aperiodic channel state information report for beam management.

According to a third aspect provided in addition to the first or second aspect, the processing circuitry determines a number of Y downlink reference signals to be indicated in the beam management report among a set of downlink reference signals. The beam management report is a detailed beam management report that indicates:
- Y downlink reference signals and
- for each of the Y reported downlink reference signals, a quality measurement result obtained from measuring the downlink reference signal.

In an optional implementation, the quality measurement result is a reference signal received power, RSRP, measurement value of the measured downlink reference signal. In an optional implementation, the number Y is determined based on configuration information received from the base station or based on a capability of the UE.

In an optional implementation, the processing circuitry, in operation, determines the Y downlink reference signals out of all downlink reference signals of the set,
- in a decreasing or increasing order of an index of the downlink reference signals within the set, or
- in a decreasing order of a quality measurement result of the downlink reference signals, or
- randomly.

According to a fourth aspect, provided in addition to any one of the first to third aspects, the processing circuitry determines a maximum number of X downlink reference signals to be indicated in the beam management report among a set of downlink reference signals. The processing circuitry determines at most X downlink reference signals that have a quality measurement result above a quality threshold. The beam management report is an intermediate beam management report that indicates the at most X downlink reference signals having a quality measurement result above the quality threshold.

In an optional implementation, the beam management report does not comprise a quality measurement result for each of the at most X downlink reference signals having a quality measurement result above the quality threshold.

In an optional implementation, the maximum number X is determined based on configuration information received from the base station or based on a capability of the UE.

According to a fifth aspect, provided in addition to the third or fourth aspect, for the detailed beam management report and for the intermediate beam management report, each of the reported downlink reference signal is indicated based on:
- an identification of the respective downlink reference signals,
- an index of the respective downlink reference signal within the set,
- a bit within a bitmap, each bit being associated with one of the downlink reference signals of the set, optionally wherein the length of the bitmap equals a number of downlink reference signals in the set,
- a beam indication field, with a value that indicates that combination of downlink reference signals indicated in the beam management report among a total number of possible combinations formed by choosing the reportable downlink reference signals R out of all the downlink reference signals S from the set, optionally wherein the length of the beam indication field is such that it can unambiguously indicate any one out of the total number of possible combinations of downlink reference signals, optionally wherein the length of the beam indicator field is log2(S choose R) bits.

According to a sixth aspect, provided in addition to any one of the first to fifth aspects, the processing circuitry measures the downlink reference signals from the set for the purpose of generating the beam management report.

In an optional implementation, the set of downlink reference signals comprises:
- one or more cell search signals, such as Synchronization Signal Block reference signals, or
- one or more UE-specific reference signals, such as Channel State Information reference signals, CSI-RS, or
- one or more cell search signals, such as Synchronization Signal Block, SSB, reference signals and one or more UE-specific reference signals, such as Channel State Information reference signals, CSI-RS.

According to a seventh aspect, provided in addition to any one of the fourth to sixth aspects, the processing circuitry determines whether to transmit a basic, a detailed or an intermediate beam management report.

In an optional implementation, the determination whether to transmit a basic, detailed or intermediate beam management report is based on configuration information received from the base station or based on a capability of the UE. In an optional implementation, the transmitter transmits information on the capability of the UE to the base station.

According to an eighth aspect, provided in addition to any one of the third to seventh aspects, the UE is equipped with at least two panels of antennas. One or both of the intermediate beam management report and the detailed beam management report is generated to further indicate, for each reported downlink reference signal, an antenna panel with which the reported downlink reference signal was received.

According to a ninth aspect, provided in addition to any one of the third to seventh aspects, the UE is equipped with at least two panels of antennas. The processing circuitry determines one among the at least two antenna panels for the beam management report. In case the determined antenna panel supports a maximum number of antenna ports for transmitting an uplink reference signal different than the antenna panel currently used by the UE for uplink transmission, one or both of the intermediate beam management report and the detailed beam management report is generated to further indicate the determined antenna panel.

In an optional implementation, the determined one antenna panel is that antenna panel among the at least two antenna panels with
- the overall best reception quality, or
- the downlink reference signal having the best reception quality among all downlink reference signals of the set.

According to a tenth aspect, provided in addition to the eighth or ninth aspects, the determined antenna panel is indicated in the beam management report by:
- a maximum number of antenna ports supported by the respective antenna panel for transmitting an uplink reference signal, or
- a capability index, wherein the capability index is associated with a maximum number of antenna ports supported by the respective antenna panel for transmitting an uplink reference signal.

According to an eleventh aspect, a method is provided comprising the following steps performed by a user equipment, UE:
determining whether to initiate a beam management reporting procedure, based on results of measurements performed by the UE on one or more downlink reference signals,
in case of determining to initiate the beam management reporting procedure, generating a beam management report comprising information for assisting beam management at a base station for the UE, and
transmitting the generated beam management report to the base station.

According to a twelfth aspect, an integrated circuit is provided which, in operation, controls a process of a user equipment, UE, the process comprising the following steps performed by the UE:
determining whether to initiate a beam management reporting procedure, based on results of measurements performed by the UE on one or more downlink reference signals,
in case of determining to initiate the beam management reporting procedure, generating a beam management report comprising information for assisting beam management at a base station for the UE, and
transmitting the generated beam management report to the base station.

## Claims

1. A user equipment, UE, comprising:
processing circuitry, which in operation, determines whether to initiate a beam management reporting procedure, based on results of measurements performed by the UE on one or more downlink reference signals,
the processing circuitry, in case of determining to initiate the beam management reporting procedure, generates a beam management report comprising information for assisting beam management at a base station for the UE, and
a transmitter, which in operation, transmits the generated beam management report to the base station.

2. The UE according to claim 1, wherein the beam management report is a basic beam management report that indicates:
- that a quality of a downlink signal reception is bad or has deteriorated, optionally by using a flag with a pre-determined value, and
optionally wherein in response to the basic beam management report, a receiver, in operation, receives, from the base station, a request for an aperiodic channel state information report for beam management.

3. The UE according to claim 1 or 2, wherein the processing circuitry, in operation, determines a number of Y downlink reference signals to be indicated in the beam management report among a set of downlink reference signals, wherein the beam management report is a detailed beam management report that indicates:
- Y downlink reference signals and
- for each of the Y reported downlink reference signals, a quality measurement result obtained from measuring the downlink reference signal,
optionally wherein the quality measurement result is a reference signal received power, RSRP, measurement value of the measured downlink reference signal,
optionally wherein the number Y is determined based on configuration information received from the base station or based on a capability of the UE,
optionally wherein the processing circuitry, in operation, determines the Y downlink reference signals out of all downlink reference signals of the set,
- in a decreasing or increasing order of an index of the downlink reference signals within the set, or
- in a decreasing order of a quality measurement result of the downlink reference signals, or
- randomly.

4. The UE according to any one of claim1 to 3, wherein the processing circuitry, in operation, determines a maximum number of X downlink reference signals to be indicated in the beam management report among a set of downlink reference signals, and wherein the processing circuitry, in operation, determines at most X downlink reference signals that have a quality measurement result above a quality threshold,
wherein the beam management report is an intermediate beam management report that indicates the at most X downlink reference signals having a quality measurement result above the quality threshold,
optionally wherein the beam management report does not comprise a quality measurement result for each of the at most X downlink reference signals having a quality measurement result above the quality threshold,
optionally wherein the maximum number X is determined based on configuration information received from the base station or based on a capability of the UE.

5. The UE according to claim 3 or 4, wherein for the detailed beam management report and for the intermediate beam management report, each of the reported downlink reference signal is indicated based on:
- an identification of the respective downlink reference signals,
- an index of the respective downlink reference signal within the set,
- a bit within a bitmap, , each bit being associated with one of the downlink reference signals of the set, optionally wherein the length of the bitmap equals a number of downlink reference signals in the set,
- a beam indication field, with a value that indicates that combination of downlink reference signals indicated in the beam management report among a total number of possible combinations formed by choosing the reportable downlink reference signals R out of all the downlink reference signals S from the set, optionally wherein the length of the beam indication field is such that it can unambiguously indicate any one out of the total number of possible combinations of downlink reference signals, optionally wherein the length of the beam indicator field is log2(S choose R) bits.

6. The UE according to any one of claims 1 to 5, wherein the processing circuitry, in operation, measures the downlink reference signals from the set for the purpose of generating the beam management report, and
optionally wherein the set of downlink reference signals comprises:
- one or more cell search signals, such as Synchronization Signal Block reference signals, or
- one or more UE-specific reference signals, such as Channel State Information reference signals, CSI-RS, or
- one or more cell search signals, such as Synchronization Signal Block, SSB, reference signals and one or more UE-specific reference signals, such as Channel State Information reference signals, CSI-RS.

7. The UE according to any one of claims 4 to 6, wherein the processing circuitry, in operation, determines whether to transmit a basic, a detailed or an intermediate beam management report,
optionally wherein the determination whether to transmit a basic, detailed or intermediate beam management report is based on configuration information received from the base station or based on a capability of the UE,
optionally wherein the transmitter, in operation, transmits information on the capability of the UE to the base station.

8. The UE according to any one of claims 3 to 7, wherein the UE is equipped with at least two panels of antennas,
wherein one or both of the intermediate beam management report and the detailed beam management report is generated to further indicate, for each reported downlink reference signal, an antenna panel with which the reported downlink reference signal was received.

9. The UE according to any one of claims 3 to 7, wherein the UE is equipped with at least two panels of antennas,
wherein the processing circuitry, in operation, determines one among the at least two antenna panels for the beam management report, and
wherein in case the determined antenna panel supports a maximum number of antenna ports for transmitting an uplink reference signal different than the antenna panel currently used by the UE for uplink transmission, one or both of the intermediate beam management report and the detailed beam management report is generated to further indicate the determined antenna panel,
optionally wherein the determined one antenna panel is that antenna panel among the at least two antenna panels with
- the overall best reception quality, or
- the downlink reference signal having the best reception quality among all downlink reference signals of the set.

10. The UE according to claim 8 or 9, wherein the determined antenna panel is indicated in the beam management report by:
- a maximum number of antenna ports supported by the respective antenna panel for transmitting an uplink reference signal, or
- a capability index, wherein the capability index is associated with a maximum number of antenna ports supported by the respective antenna panel for transmitting an uplink reference signal.

11. A method comprising the following steps performed by a user equipment, UE:
determining whether to initiate a beam management reporting procedure, based on results of measurements performed by the UE on one or more downlink reference signals,
in case of determining to initiate the beam management reporting procedure, generating a beam management report comprising information for assisting beam management at a base station for the UE, and
transmitting the generated beam management report to the base station.

12. An integrated circuit, which, in operation, controls a process of a user equipment, UE, the process comprising the following steps performed by the UE:
determining whether to initiate a beam management reporting procedure, based on results of measurements performed by the UE on one or more downlink reference signals,
in case of determining to initiate the beam management reporting procedure, generating a beam management report comprising information for assisting beam management at a base station for the UE, and
transmitting the generated beam management report to the base station.
